# EUROPÄISCHE PATENTSCHRIFT

(11) **EP 1 658 430 B1**
(45) Veröffentlichungstag und Bekanntmachung des Hinweises auf die Patenterteilung: **27.02.2008**
(21) Anmeldenummer: 04762604.9
(22) Anmeldetag: 05.08.2004
(51) Int. Cl.: F02M 69/54, F02M 69/46

(54) **VORRICHTUNG ZUM FÖRDERN VON KRAFTSTOFF AUS EINEM VORRATSBEHÄLTER ZU EINER BRENNKRAFTMASCHINE**
DEVICE FOR CONVEYING FUEL OUT OF A TANK AND TO A COMBUSTION ENGINE
DISPOSITIF POUR ACHEMINER DU CARBURANT ENTRE UN RESERVOIR ET UN MOTEUR A COMBUSTION INTERNE

(30) Priorität: 18.08.2003 DE 10337850
(43) Veröffentlichungstag der Anmeldung: 24.05.2006
(73) Patentinhaber: ROBERT BOSCH GMBH, 70442 Stuttgart (DE)
(72) Erfinder: SCHELHAS, Peter, 70329 Stuttgart (DE)
(86) Internationale Anmeldenummer: PCT/DE2004/001759
(87) Internationale Veröffentlichungsnummer: WO 2005/017346

(56) Entgegenhaltungen:
- US-A- 5 339 785
- US-A- 5 551 404
- US-A- 5 590 631

## Beschreibung

### Stand der Technik

Die Erfindung geht aus von einer Vorrichtung nach der Gattung des Hauptanspruchs.
Es ist schon eine Vorrichtung zum Fördern von Kraftstoff aus der DE 195 27 134 A1 bekannt, bei der in einem Ventilgehäuse ein Rückschlagventil und ein Druckablaßventil parallel zueinander angeordnet sind, wobei das Druckablaßventil in entgegengesetzter Richtung zum Rückschlagventil durchströmt wird. Während des Betriebs einer Förderpumpe wird Kraftstoff über das Rückschlagventil in einen Kraftstoffverteiler gefördert, wobei das Rückschlagventil nach dem Abschalten der Förderpumpe den Druck im Kraftstoffverteiler aufrechterhält. Wenn nach dem Abstellen der Brennkraftmaschine ein durch Aufheizen der Vorrichtung verursachter Druckanstieg in dem Kraftstoffverteiler erfolgt, öffnet das Druckablaßventil und läßt Kraftstoff zurück in den Vorratsbehälter strömen. Nachteilig ist, daß die Regelgenauigkeit insbesondere bei kleinen Volumenströmen nicht ausreichend ist.

Aus der DE 197 05 405 A1 ist ein Membranventil mit einer hohen Regelgenauigkeit bekannt. Das Membranventil weist eine erste Kammer und eine von der ersten Kammer mittels eines Ventilkörpers getrennte zweite Kammer auf, wobei der Ventilkörper mit einem Ventilsitz zusammenwirkt und ein im Bereich des Ventilsitzes angeordneter erster Anschlußkanal in die erste Kammer mündet. Nachteilig ist, daß das Membranventil unverändert nicht als Druckablaßventil einsetzbar ist, da es bei Betrieb der Förderpumpe ebenso wie das Rückschlagventil in Richtung Kraftstoffverteiler öffnet.

### Vorteile der Erfindung

Die erfindungsgemäße Vorrichtung mit den kennzeichnenden Merkmalen des Hauptanspruchs hat demgegenüber den Vorteil, daß auf einfache Art und Weise eine Verbesserung dahingehend erzielt wird, daß der Druckregler als Druckablaßventil einsetzbar ist, indem der Ventilkörper einen Durchgangskanal aufweist, der den ersten Anschlußkanal bei geschlossenem Druckregelventil mit der zweiten Kammer verbindet. Da bei geschlossenem Druckregelventil und bei Betrieb der Förderpumpe in der zweiten Kammer des Druckregelventils der gleiche Druck wie in der ersten Kammer herrscht und zusätzlich der Ventilkörper von einem Federelement in Schließrichtung vorgespannt ist, bleibt das Druckregelventil bei Betrieb der Förderpumpe im Gegensatz zum Stand der Technik geschlossen.

Durch die in den Unteransprüchen aufgeführten Maßnahmen sind vorteilhafte Weiterbildungen und Verbesserungen der im Hauptanspruch angegebenen Vorrichtung möglich.

Nach einer vorteilhaften Ausgestaltung ist vorgesehen, das Druckregelventil als Membranventil auszubilden, da mit einem Membranventil besonders gute Regeleigenschaften erzielbar sind.

Mittels eines in der zweiten Kammer angeordneten Federelementes, das den Ventilkörper in Schließrichtung vorspannt, ist der vorbestimmte Öffnungsdruck, bei dem das Druckregelventil öffnet, unabhängig von einem von der Förderpumpe aufgebauten Druck einstellbar.

Weiterhin vorteilhaft ist, daß das Druckregelventil parallel zu einem Rückschlagventil angeordnet ist, da auf diese Weise eine optimale Regelung des Drucks im Kraftstoffverteiler ermöglicht ist. Bei einem vorteilhaften Ausführungsbeispiel ist das Rückschlagventil in einem dritten Druckleitungsabschnitt und das Druckregelventil in einem vierten Druckleitungsabschnitt angeordnet ist, wobei der dritte Druckleitungsabschnitt in Richtung der Brennkraftmaschine und der vierte Druckleitungsabschnitt in Richtung Vorratsbehälter durchströmbar ist.

Auch vorteilhaft ist, wenn in dem vierten Druckleitungsabschnitt stromauf eines in die erste Kammer mündenden zweiten Anschlußkanals des Druckregelventils ein Schutzfilter vorgesehen ist, da das Druckregelventil auf diese Weise vor Schmutzpartikeln geschützt ist.

### Zeichnung

Ein Ausführungsbeispiel der Erfindung ist in der Zeichnung vereinfacht dargestellt und in der nachfolgenden Beschreibung näher erläutert.

### Beschreibung des Ausführungsbeispiels

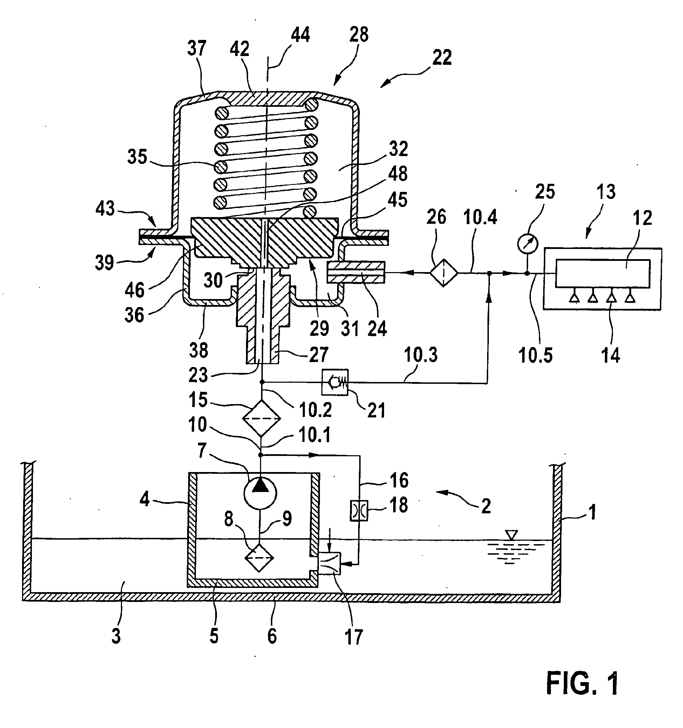

Fig.1 zeigt eine Vorrichtung zum Fördern von Kraftstoff mit einem erfindungsgemäßen Druckregelventil.

Die Vorrichtung weist ein in einem Vorratsbehälter 1 angeordnetes Kraftstofffördermodul 2 auf. In dem Vorratsbehälter 1 ist beispielsweise ein Kraftstoff 3 gespeichert.

Das Kraftstofffördermodul 2 besteht aus einem beispielsweise topfförmigen Speicherbehälter 4, in dem eine Förderpumpe 7 angeordnet ist, die Kraftstoff beispielsweise über einen Filter 8 und eine Saugleitung 9 aus dem Speicherbehälter 4 ansaugt und druckerhöht über eine Druckleitung 10 beispielsweise zu einem Kraftstoffverteiler 12 einer Brennkraftmaschine 13 fördert. Der Kraftstoffverteiler 12 ist mit mehreren Einspritzventilen 14 verbunden, die den Kraftstoff in nicht dargestellte Zylinder der Brennkraftmaschine 13 einspritzen. Die Druckleitung 10 kann stromab aber auch mit einer Hochdruckpumpe einer sogenannten Benzindirekteinspritzung oder eines Dieseleinspritzsystems verbunden sein, die den Kraftstoff unter Hochdruck in den Kraftstoffverteiler und über Einspritzventile in Zylinder der Brennkraftmaschine 13 einspritzt.

Der Speicherbehälter 4 bevorratet ausreichend viel Kraftstoff, damit eine Kraftstoffversorgung der Brennkraftmaschine 13 durch die Förderpumpe 7 sichergestellt ist, auch wenn, beispielsweise durch eine Kurvenfahrt und dadurch bedingte Schwappbewegungen des Kraftstoffs im Vorratsbehälter 1, kein Kraftstoff in den Speicherbehälter 4 gefördert wird. Der Speicherbehälter 4 ist mit seinem Topfboden 5 nahe einem Tankboden 6 des Vorratsbehälters 1 angeordnet.

Die Förderpumpe 7 ist beispielsweise eine Strömungspumpe, die elektrisch von einem Aktor, beispielsweise einem Anker eines Elektromotors, angetrieben wird.

Der Filter 8 schützt die Vorrichtung stromab des Filters 8 vor im Kraftstoff enthaltenen groben Schmutzpartikeln.

In der Druckleitung 10 ist beispielsweise ein Hauptfilter 15 angeordnet, der die im Kraftstoff enthaltenen feinen Schmutzpartikel herausfiltert.

Stromab der Förderpumpe 7 und stromauf des Hauptfilters 15 ist an der Druckleitung 10 eine Treibleitung 16 vorgesehen, die über eine Saugstrahlpumpe 17 in den Speicherbehälter 4 mündet. Die Saugstrahlpumpe 17 hat die Aufgabe, Kraftstoff aus dem Vorratsbehälter 1 in den Speicherbehälter 4 zu fördern, damit der Speicherbehälter 4 nicht von der Förderpumpe 7 leer gesaugt wird. In der Treibleitung 16 kann ein Drosselelement 18 angeordnet sein, das den über die Treibleitung 16 fließenden Volumenstrom begrenzt.

Eine Saugstrahlpumpe ist beispielsweise aus der DE 198 56 298 Cl bekannt, wobei deren Inhalt ausdrücklich Teil der Offenbarung dieser Anmeldung sein soll.

Die Druckleitung 10 besteht aus einem ersten Druckleitungsabschnitt 10.1 zwischen der Förderpumpe 7 und dem Hauptfilter 15, einem zweiten Druckleitungsabschnitt 10.2, der sich stromab in zwei parallel angeordnete Druckleitungsabschnitte, einem dritten Druckleitungsabschnitt 10.3 und einem vierten Druckleitungsabschnitt 10.4, verzweigt, und einem fünften Druckleitungsabschnitt 10.5, der stromab der Vereinigung der beiden parallelen Druckleitungsabschnitte 10.3,10.4 gebildet ist.

In dem dritten Druckleitungsabschnitt 10.3 ist beispielsweise ein Rückschlagventil 21 und in dem vierten Druckleitungsabschnitt 10.4 ein erfindungsgemäßes Druckregelventil 22 mit einem ersten Anschlußkanal 23 und einem zweiten Anschlußkanal 24 angeordnet. Der erste Anschlußkanal 23 ist in einem Anschlußstutzen 27 ausgebildet. In dem vierten Druckleitungsabschnitt 10.4 stromauf des zweiten Anschlußkanals 24 ist beispielsweise ein Schutzfilter 26 vorgesehen, um das Druckregelventil 22 vor Schmutzpartikeln zu schützen. Der Schutzfilter hat beispielsweise eine Maschenweite kleiner gleich 60 Mikrometer.

An der Druckleitung 10, beispielsweise im fünften Druckleitungsabschnitt 10.5, oder am Kraftstoffverteiler 12 ist ein Drucksensor 25 vorgesehen, der den Druck in der Druckleitung 10 bzw. den Druck in dem Kraftstoffverteiler 12 erfaßt.

Das erfindungsgemäße Druckregelventil 22 hat ein Ventilgehäuse 28 mit einem beweglichen Ventilkörper 29 und einem mit dem Ventilkörper 29 zusammenwirkenden festen Ventilsitz 30 am Anschlußstutzen 27. Der Ventilkörper 29 ist beispielsweise als Membran ausgebildet. Das Druckregelventil 22 weist zwei aneinandergrenzende Kammern, eine erste Kammer 31 und eine zweite Kammer 32, auf, die durch den Ventilkörper 29 voneinander getrennt sind. Der erste Anschlußkanal 23 und der zweite Anschlußkanal 24 münden in die erste Kammer 31, wobei der erste Anschlußkanal 23 im Bereich des Ventilsitzes 30 angeordnet ist. In der zweiten Kammer 32 ist ein Federelement 35, beispielsweise eine Schraubenfeder, vorgesehen, das den Ventilkörper 29 mit einer Vorspannung in Schließrichtung an den Ventilsitz 30 drückt. Das Federelement 35 liegt beispielsweise mit dem einen Ende an einem zweiten Topfboden 42 und dem anderen Ende an dem Ventilkörper 29 an.

Das Ventilgehäuse 28 des Druckregelventils 22 weist beispielsweise ein erstes Gehäuseteil 36 und ein zweites Gehäuseteil 37 auf. Das erste Gehäuseteil 36 und das zweite Gehäuseteil 37 sind beispielsweise topfförmig ausgebildet - Das erste Gehäuseteil 36 hat einen ersten Topfboden 38 und auf der dem ersten Topfboden 38 abgewandten Seite beispielsweise eine ringförmig umlaufende erste Schulter 39. Das zweite Gehäuseteil 37 hat den zweiten Topfboden 42 und auf der dem zweiten Topfboden 42 abgewandten Seite beispielsweise eine ringförmig umlaufende zweite Schulter 43. Das erste Gehäuseteil 36 und das zweite Gehäuseteil 37 liegen mit der ersten Schulter 39 und der zweiten Schulter 43 aneinander und schließen einen Innenraum ein, in dem die erste Kammer 31 und die zweite Kammer 32 vorgesehen ist. Das erste Gehäuseteil 36 und das zweite Gehäuseteil 37 sind beispielsweise durch Schweißen, Clipsen, Bördeln, Kleben oder Klemmen miteinander verbunden.

Das Druckregelventil 22 ist beispielsweise ein Membranventil, wobei die Membran 45 einen Teil des ventilkörpers 29 bildet. Die Membran 45 ist beispielsweise zwischen der ersten Schulter 39 und der zweiten Schulter 43 eingespannt und dichtet außen die erste Kammer 31 gegenüber der zweiten Kammer 32 ab. Im mittleren Bereich trägt die Membran 45 als weiteres Teil des Ventilkörpers 29 einen mit dem Ventilsitz 30 zusammenwirkenden Dichtkörper 46.

Der Ventilsitz 30 ist beispielsweise zentrisch zu einer Ventilachse 44 an dem ersten Topfboden 38 des ersten Gehäuseteils 36 angeordnet. Im Bereich des Ventilsitzes 30, beispielsweise konzentrisch zur Ventilachse 44, ist der erste Anschlußkanal 23 und beispielsweise am Umfang des ersten Gehäuseteils 36 der zweite Anschlußkanal 24 vorgesehen.

Das Federelement 35 und der Ventilkörper 29 sind beispielsweise konzentrisch zu der Ventilachse 44 angeordnet.

Bei geschlossenem Druckregelventil 22 liegt der Ventilkörper 29 mit dem Dichtkörper 46 an dem Ventilsitz 30 dicht an und verschließt dadurch den ersten Anschlußkanal 23. Bei geöffnetem Druckregelventil 22 hat der Dichtkörper 46 vom Ventilsitz 30 abgehoben und öffnet den ersten Anschlußkanal 23, so daß Kraftstoff über den zweiten Anschlußkanal 24, die erste Kammer 31 in den ersten Anschlußkanal 23 strömen kann.

Erfindungsgemäß weist der Dichtkörper 46 des Ventilkörpers 29 einen Durchgangskanal 48 auf, der den ersten Anschlußkanal 23 bei geschlossenem Druckregelventil 22 mit der zweiten Kammer 32 und bei geöffnetem Druckregelventil 22 mit der ersten Kammer 31 verbindet und konzentrisch zum ersten Anschlußkanal 23 angeordnet ist.

Bei Betrieb der Förderpumpe 7 wird der Kraftstoff über den Filter 8, die Saugleitung 9, die Förderpumpe 7, den ersten Druckleitungsabschnitt 10.1, den Hauptfilter 15, den zweiten Druckleitungsabschnitt 10.2, den dritten Druckleitungsabschnitt 10.3 mit dem Rückschlagventil 21, den fünften Druckleitungsabschnitt 10.5 zum Kraftstoffverteiler 12 der Brennkraftmaschine 13 gefördert. Das Rückschlagventil 21 verhindert, daß Kraftstoff bei abgeschalteter Förderpumpe 7 aus der Druckleitung 10 von stromab des Rückschlagventils 21 über die Druckleitung 10 nach stromauf des Rückschlagventils 21 in den Speicherbehälter 4 zurückläuft. Auf diese Weise bleibt der von der Förderpumpe 7 aufgebaute Druck in der Druckleitung 10 stromab des Rückschlagventils 21 und im Kraftstoffverteiler 12 auch bei abgeschalteter Förderpumpe 7 zumindest über eine gewisse Zeit erhalten.

Die zweite Kammer 32 des Druckregelventils 22 ist über den Durchgangskanal 48 mit Kraftstoff gefüllt und dicht gegenüber der Umgebung ausgebildet.

Bei Betrieb der Förderpumpe 7 ist das Druckregelventil 22 geschlossen, da sowohl in der ersten Kammer 31 über den zweiten Anschlußkanal 24 als auch in der zweiten Kammer 32 über den ersten Anschlußkanal 23 und den Durchgangskanal 48 zumindest annähernd der von der Förderpumpe 7 aufgebaute Druck herrscht, so daß sich die Druckkräfte, die auf die der zweiten Kammer 32 zugewandten Seite des Ventilkörpers 29 ausgeübt werden, mit den Druckkräften, die auf die der ersten Kammer 31 zugewandten Seite des Ventilkörpers 29 ausgeübt werden, zumindest annähernd gegenseitig aufheben. Dadurch ist der Öffnungsdruck, ab dem das Druckregelventil 22 öffnet, unabhängig von dem von der Förderpumpe 7 aufgebauten Druck. Zusätzlich spannt das Federelement 35 den Ventilkörper 29 in Schließrichtung vor, so daß das Druckregelventil 22 bei Betrieb der Förderpumpe 7 zuverlässig geschlossen ist.

Der Durchgangskanal 48 hat die Aufgabe, die zweite Kammer 32 des Druckregelventils 22 mit der Druckleitung 10 zu verbinden, damit der Druck der Förderpumpe 7 sich über die Druckleitung 10.1,10.2,10.4, den ersten Anschlußkanal 23 und den Durchgangskanal 48 bis in die zweite Kammer 32 ausbreitet.

Bei abgeschalteter Förderpumpe 7 sinkt der Druck in der Druckleitung 10 zwischen der Förderpumpe 7 und dem Rückschlagventil 21 und zwischen der Förderpumpe 7 und dem Druckregelventil 22 nahezu schlagartig auf Atmosphärendruck. Der Druck in der zweiten Kammer 32 des Druckregelventils 22 hat wegen der hydraulischen Verbindung über den Durchgangskanal 48 und den ersten Anschlußkanal zu der Förderpumpe 7 auch nur noch Atmosphärendruck, während der Druck in der ersten Kammer 31 wegen der hydraulischen Verbindung zum Kraftstoffverteiler 12 erhalten bleibt. Aufgrund der Druckdifferenz zwischen der ersten Kammer 31 und der zweiten Kammer 32 wirkt am Ventilkörper 29 eine resultierende Druckkraft entgegen der Federkraft des Federelements 35. Ist die resultierende Druckkraft größer als die Federkraft des Federelements 35, beispielsweise durch einen Druckanstieg im Kraftstoffverteiler 12, öffnet das Druckregelventil 22.
Das Federelement 35 ist derart ausgelegt, daß der Ventilkörper 29 vom Ventilsitz 30 abhebt und damit das Druckregelventil öffnet, wenn der Druck in dem Kraftstoffverteiler 12 oder der Druckleitung 10 stromab des Rückschlagventils 21 einen vorbestimmten Öffnungsdruck erreicht oder überschreitet.

Ein Ansteigen des Drucks in dem Kraftstoffverteiler 12 und in der Druckleitung 10 stromab des Rückschlagventils 21 erfolgt beispielsweise im Schubbetrieb der Brennkraftmaschine oder in einer sogenannten Heißabstellphase, in der die Brennkraftmaschine nach dem Abstellen viel Wärme an einen die Brennkraftmaschine umgebenden Motorraum abgibt, so daß auch der Kraftstoffverteiler 12 aufgeheizt wird. Durch den Temperaturanstieg im Kraftstoffverteiler 12 kommt es zu einer Erwärmung des Kraftstoffs und damit zu einem Druckanstieg in dem Kraftstoffverteiler 12 und der Druckleitung stromab des Rückschlagventils 21.

Das geöffnete Druckregelventil 22 läßt Kraftstoff über den vierten Druckleitungsabschnitt 10.4, den zweiten Anschlußkanal 24, die erste Kammer 31, den ersten Anschlußkanal 23, den zweiten Druckleitungsabschnitt 10.2, den Hauptfilter 15, den ersten Druckleitungsabschnitt 10.1, die Förderpumpe 7, die Saugleitung 9 und den Filter 8 in den Speicherbehälter 4 zurückströmen. Der Kraftstoff kann aber anstatt über die Förderpumpe 7, die Saugleitung 9 und den Filter 8 auch über die Treibleitung 16, die Drossel 18 und die Saugstrahlpumpe 17 in den Speicherbehälter 4 zurückströmen.

Das Druckregelventil 22 schützt die Druckleitung 10 und den Kraftstoffverteiler auf diese Weise vor einem unzulässigen Überdruck, der auch die Einspritzventile 14 und Dichtungen beschädigen könnte.

Das erfindungsgemäße Druckregelventil 22 hat insbesondere bei kleinen Volumenströmen eine höhere Regelgenauigkeit und ein präziseres Öffnungsverhalten als Druckregelventile beim Stand der Technik, da der über den ersten Anschlußkanal 23 auf den Ventilkörper 29 wirkende Druck nicht nur auf die dem ersten Anschlußkanal 23 zugewandte und sich mit dem dem ersten Anschlußkanal 23 überdeckende kleine Fläche des Ventilkörpers 29 wirkt, sondern auf die gesamte dem Ventilsitz 30 abgewandte Fläche des Ventilkörpers 29 wirkt. Dadurch hat das Druckregelventil 22 insbesondere bei kleinen Volumenströmen eine steilere Ventilkennlinie als der Stand der Technik, wobei für die Ventilkennlinie der am Druckregelventil 22 anliegende Differenzdruck über dem Volumenstrom, der über das Druckregelventil 22 fließt, aufgetragen ist. Ein Druckanstieg am zweiten Anschlußkanal 24 bewirkt daher eine kleinere Zunahme des Volumenstroms als beim Stand der Technik.

## Patentansprüche

1. Vorrichtung zum Fördern von Kraftstoff aus einem Vorratsbehälter zu einer Brennkraftmaschine mit einem Druckregelventil, das eine erste Kammer und eine von der ersten Kammer mittels eines Ventilkörpers getrennte zweite Kammer aufweist, wobei der Ventilkörper mit einem Ventilsitz zusammenwirkt und ein im Bereich des Ventilsitzes angeordneter erster Anschlußkanal bei geöffnetem Druckregelventil in die erste Kammer mündet, **dadurch gekennzeichnet, dass** der Ventilkörper (29) einen Durchgangskanal (48) aufweist, der den ersten Anschlußkanal (23) bei geschlossenem Druckregelventil (22) mit der zweiten Kammer (32) verbindet.

2. Vorrichtung nach Anspruch 1, **dadurch gekennzeichnet, dass** der Ventilkörper (29) eine Membran (45) aufweist.

3. Vorrichtung nach Anspruch 1, **dadurch gekennzeichnet, dass** die zweite Kammer (32) dicht gegenüber der Atmosphäre ausgebildet ist.

4. Vorrichtung nach Anspruch 1, **dadurch gekennzeichnet, dass** die zweite Kammer (32) ein Federelement (35) aufweist, das den Ventilkörper (29) in Schließrichtung vorspannt.

5. Vorrichtung nach Anspruch 1, **dadurch gekennzeichnet, dass** das Druckregelventil (22) parallel zu einem Rückschlagventil (21) angeordnet ist.

6. Vorrichtung nach Anspruch 5, **dadurch gekennzeichnet, dass** das Rückschlagventil (21) in einem dritten Druckleitungsabschnitt (10.3) und das Druckregelventil (22) in einem vierten Druckleitungsabschnitt (10.4) angeordnet ist, wobei der dritte Druckleitungsabschnitt (10.3) in Richtung der Brennkraftmaschine (13) und der vierte Druckleitungsabschnitt (10.4) in Richtung Vorratsbehälter (1) durchströmbar ist.

7. Vorrichtung nach Anspruch 6, **dadurch gekennzeichnet, dass** in dem vierten Druckleitungsabschnitt (10.4) stromauf eines in die erste Kammer (31) mündenden zweiten Anschlußkanals (24) des Druckregelventils (22) ein Schutzfilter (26) vorgesehen ist.

8. Vorrichtung nach Anspruch 7, **dadurch gekennzeichnet, dass** der Schutzfilter (26) eine Maschenweite kleiner gleich 60 Mikrometer aufweist.

## Claims

1. Device for feeding fuel from a storage tank to an internal combustion engine, having a pressure regulating valve which has a first chamber and a second chamber which is separated from the first chamber by means of a valve body, wherein the valve body interacts with a valve seat and wherein a first connecting duct, which is arranged in the region of the valve seat, opens out into the first chamber when the pressure regulating valve is open, **characterized in that** the valve body (29) has a passage duct (48) which connects the first connecting duct (23) to the second chamber (32) when the pressure regulating valve (22) is closed.

2. Device according to Claim 1, **characterized in that** the valve body (29) has a diaphragm (45).

3. Device according to Claim 1, **characterized in that** the second chamber (32) is designed so as to be sealed off with respect to the atmosphere.

4. Device according to Claim 1, **characterized in that** the second chamber (32) has a spring element (35) which preloads the valve body (29) in the closing direction.

5. Device according to Claim 1, **characterized in that** the pressure regulating valve (22) is arranged parallel to a non-return valve (21).

6. Device according to Claim 5, **characterized in that** the non-return valve (21) is arranged in a third pressure line section (10.3) and the pressure regulating valve (22) is arranged in a fourth pressure line section (10.4), with it being possible for flow to pass through the third pressure line section (10.3) in the direction of the internal combustion engine (13) and through the fourth pressure line section (10.4) in the direction of the storage tank (1).

7. Device according to Claim 6, **characterized in that** a protective filter (26) is provided in the fourth pressure line section (10.4) upstream of a second connecting duct (24), which opens out into the first chamber (31), of the pressure regulating valve (22).

8. Device according to Claim 7, **characterized in that** the protective filter (26) has a mesh width of less than or equal to 60 micrometres.

## Revendications

1. Dispositif pour refouler du carburant à partir d'un réservoir vers un moteur à combustion interne, comportant une soupape de régulation de pression ayant une première chambre et une seconde chambre séparée de la première chambre par un organe de soupape,
l'organe de soupape coopérant avec un siège de soupape et un premier canal de branchement prévu dans la région du siège de soupape, débouche dans la première chambre lorsque la soupape de régulation de pression est ouverte,
**caractérisé en ce que**
le corps de soupape (29) comporte un canal traversant (48) reliant le premier canal de branchement (23) à la seconde chambre (32) lorsque la soupape de régulation de pression (22) est fermée.

2. Dispositif selon la revendication 1,
**caractérisé en ce que**
le corps de soupape (29) comporte une membrane (45).

3. Dispositif selon la revendication 1,
**caractérisé en ce que**
la seconde chambre (32) est étanche par rapport à l'atmosphère.

4. Dispositif selon la revendication 1,
**caractérisé en ce que**
la seconde chambre (32) comporte un élément de ressort (35) qui assure la précontrainte du corps de soupape (29) dans le sens de la fermeture.

5. Dispositif selon la revendication 1,
**caractérisé en ce que**
la soupape de régulation de pression (22) est branchée en parallèle à un clapet anti-retour (21).

6. Dispositif selon la revendication 5,
**caractérisé en ce que**
le clapet anti-retour (21) est installé dans un troisième segment de conduite de pression (10.3) et la soupape de régulation de pression (22) est installée dans un quatrième segment de conduite de pression (10.4), le troisième segment de conduite de pression (10.3) étant traversé en direction du moteur à combustion interne (13) et le quatrième segment de conduite de pression (10.4) étant traversé en direction du réservoir (1).

7. Dispositif selon la revendication 6,
**caractérisé par**
un filtre protecteur (26) installé dans le quatrième segment de conduite de pression (10.4) en amont d'un second canal de branchement (24) de la soupape de régulation de pression (22) débouchant dans la première chambre (31).

8. Dispositif selon la revendication 7,
**caractérisé en ce que**
le filtre protecteur (26) a une dimension de maille inférieure ou égale à 60 microns.
